# EUROPEAN PATENT SPECIFICATION

(11) **EP 3 631 380 B1**
(45) Date of publication and mention of the grant of the patent: **18.01.2023**
(21) Application number: 18810350.1
(22) Date of filing: 14.05.2018
(51) Int. Cl.: G01F 23/04, F01M 11/12

(54) **DIPSTICK, GAUGE ARRANGEMENT, AND RELATED DEVICES**
MESSSTAB, MESSANORDNUNG UND VERWANDTE VORRICHTUNGEN
JAUGE, AGENCEMENT DE JAUGE ET DISPOSITIFS ASSOCIÉS

(30) Priority: 30.05.2017 SE 1750676
(43) Date of publication of application: 08.04.2020
(73) Proprietor: Scania CV AB, 151 87 Södertälje (SE)
(72) Inventor: LARSSON, John, 181 66 Lidingö (SE)
(74) Representative: Scania CV AB
(86) International application number: PCT/SE2018/050493
(87) International publication number: WO 2018/222103

(56) References cited:
- EP-A1- 1 764 590
- DE-A1-102005 055 610
- JP-A- 2000 065 624
- JP-A- 2004 286 714
- JP-A- 2004 286 714
- JP-A- 2013 205 050
- JP-A- 2013 205 050
- JP-U- H0 532 706
- JP-U- H0 532 706
- JP-U- H0 557 307
- JP-U- H0 557 307
- US-A- 3 377 708
- US-A- 4 330 940
- US-A1- 2004 143 985
- US-A1- 2015 285 668
- US-A1- 2015 285 668
- US-A1- 2016 334 260
- US-B2- 9 182 263

## Description

### TECHNICAL FIELD

The present invention relates to a dipstick for indicating a liquid level in a liquid reservoir. The present invention further relates to a gauge arrangement for indicating a liquid level in a liquid reservoir, wherein the gauge arrangement comprises a dipstick. The present invention further relates to a power source, a transmission, and a vehicle.

### BACKGROUND

Dipsticks can for example be used to measure the quantity of liquid in an otherwise inaccessible liquid reservoir. Usually, a dipstick comprises a level indicator arranged at an end of the dipstick which is intended to be dipped into the liquid of the liquid reservoir. By checking the extent of level indicator covered by the liquid, a user can gain information about the level of liquid in the liquid reservoir. The most familiar example is the oil level dipstick found on most internal combustion engines. Other examples are dipsticks used to measure fuel levels in fuel tanks and oil level in a transmission. An upper cap of the dipstick usually provides a stopper of the dip stick such that the level indicator is positioned at a predetermined position within the liquid reservoir. US2015/285668 A1 and DE102005055610 A1 describe known examples of dipsticks.

Several problems may be addressed when designing a dipstick. A first problem is measuring accuracy. That is, many devices, such as internal combustion engines and transmissions rely on a correct amount of liquid, such as oil. In internal combustion engines, as well as in transmissions, a too low, as well as a too high, level of oil may cause damages to the engine and to the transmission. There are many factors that affect the measuring accuracy of a dipstick. For the above given reasons, as well as for other reasons, it may be vital to design the dipstick such that it provides a good measuring accuracy.

A second problem that may be addressed is that in during operation of a device, the pressure in the liquid reservoir of the device may increase. For example, an internal combustion engine usually comprises a liquid reservoir, in the form of an oil reservoir, in a lower portion of a crank case of the internal combustion engine. During operation, some gas is leaking past piston rings of pistons of the engine into the crank case. Such gas is usually referred to as blow by gas. Internal combustion engines are usually provided with a crank case ventilation arrangement configured to guide such blow by gas to the atmosphere or to the inlet of the engine. However, in some situations, such as in high leakage situations, or in situations where the crank case ventilation arrangement becomes clogged, an over pressure may arise in the oil reservoir of the engine.

An over pressure may also arise in other devices utilizing dipsticks. For example, the interior of a transmission is usually sealed from the external environment to ensure a clean environment within the transmission. During operation, the temperature within the interior of the transmission may increase which may lead to the build-up of an over pressure in the interior of the transmission. Likewise, the temperature of an inner volume of a fuel tank may vary during the day. Therefore, an over pressure may also arise in such a device, and in similar devices.

Dipsticks are usually used in gauge arrangements comprising tubes, wherein the dipstick is arranged to be inserted into the tube. A third problem that may be addressed is the accumulation of dirt, debris, clay, and/or liquid film in the tube.

A fourth problem that may be addressed is that in general, it is an advantage if products are designed such that they can be manufactured in a cost-efficient manner, while comprising different features, and while being capable of performing different functions.

### SUMMARY

It is an object of the present invention to overcome, or at least alleviate, at least some of the above-mentioned problems and drawbacks.

According to a first aspect of the invention, the object is achieved by a dipstick for indicating a liquid level in a liquid reservoir, wherein the dipstick comprises a stick body comprising a first end and a second end. The dipstick further comprises a level indicator arranged at the first end, and a stopper arranged at a portion of the stick body between the first and second ends. The stick body, including the stopper, is configured to be inserted into a tube extending into the liquid reservoir. The stopper is arranged to abut against a narrowing portion of the tube to position the level indicator at a predetermined position within the liquid reservoir. The stopper comprises a first protrusion having a first outer circular surface and a second protrusion having a second outer circular surface. The first and second outer circular surfaces have essentially the same outer diameters. The stopper comprises an annular groove arranged between the first and second protrusions. The first outer circular surface comprises at least one first recess, and the second outer circular surface comprises at least one second recess.

Since the stopper is arranged at a portion of the stick body between the first and second ends, a relative short distance between the stopper and the level indicator is provided, in comparison to a dipstick comprising a stopper at an upper end of the dip stick. Accordingly, due to these features, the measuring accuracy of the dipstick is improved in a cost-efficient manner.

Since the stopper comprises the first and second protrusions each having outer circular surfaces, and since the stopper comprises the annular groove arranged between the first and second protrusions, displacement of the stopper is facilitated along a tube having an inner diameter essentially corresponding to the outer diameters of the first and second outer circular surfaces.

Further, since the stopper comprises the annular groove arranged between the first and second protrusions, and since the first outer circular surface comprises at least one first recess, and the second outer circular surface comprises at least one second recess, fluid may flow past the stopper, when the stopper is inserted into a tube having an inner diameter essentially corresponding to the outer diameter of the first and second protrusions. As a result, a stopper, and thus also a dipstick comprising the stopper, is provided, capable of eliminating, or at least alleviating, the risk of a pressure build-up in the liquid reservoir. Thereby, the risk of displacement of the dipstick out of the tube, caused by an over pressure in the liquid reservoir, is reduced.

Still further, since the stopper comprises the first and second protrusions each having outer circular surfaces, the stopper will, upon displacement in a tube having an inner diameter essentially corresponding to the outer diameter of the first and second protrusions, remove dirt, debris, clay, and/or liquid film in the tube, in an efficient manner.

Accordingly, a dipstick is provided overcoming, or at least alleviating, at least some of the above-mentioned problems and drawbacks. As a result, the above-mentioned object is achieved.

Optionally, the at least one first recess is arranged at a different circumferential position than the at least one second recess. Thereby, the stopper will, in a still more efficient manner, remove dirt, debris, clay, and/or liquid film upon displacement in a tube having an inner diameter essentially corresponding to the outer diameter of the first and second protrusions.

Optionally, the at least one first and second recesses, and the annular groove, are arranged such that they together form a fluid connection past the stopper, when the stopper is inserted into a tube having an inner diameter essentially corresponding to the outer diameter of the first and second protrusions. As a result, the stopper is capable of eliminating, or at least alleviating, the risk of a pressure build-up in the liquid reservoir in a still more efficient manner since fluid may flow through the fluid connection. Thereby, the risk of displacement of the dipstick out of the tube caused by an over pressure in the liquid reservoir is reduced.

The first outer circular surface comprises at least two first recesses, and the second outer circular surface comprises at least two second recesses, and wherein the at least two first recesses are arranged at different circumferential positions than the at least two second recesses. As a result, a stopper is provided capable of eliminating, or at least alleviating, the risk of a pressure build-up in the liquid reservoir in a still more efficient manner, thus further reducing the risk of displacement of the dipstick out of the tube caused by an over pressure in the liquid reservoir. Further, since the at least two first recesses are arranged at different circumferential positions than the at least two second recesses, efficient removal of dirt, debris, clay, and/or liquid film in the tube is ensured upon displacement of the stopper along the tube.

Optionally, the stopper comprises an O-ring arranged in the annular groove. Thereby, a stopper is provided further ensuring removal dirt, debris, clay, and/or liquid film in the tube upon displacement of the stopper along the tube. Further, the O-ring may prevent transport of dirt, debris, clay, and/or liquid from past the stopper, when the stopper is inserted into the tube.

Optionally, each recess of the first and second recesses extend past an inner radius of the O-ring seen in a radial direction of the stopper, from the first and second outer circular surfaces towards a centre axis of the stopper. Thereby, a fluid connection past the stopper is ensured, when the stopper is inserted into a tube having an inner diameter essentially corresponding to the outer diameter of the first and second protrusions. Thus, also according to these embodiments, a stopper is provided capable of eliminating, or at least alleviating, the risk of a pressure build-up in the liquid reservoir in a still more efficient manner, thus reducing the risk of displacement of the dipstick out of the tube caused by an over pressure in the liquid reservoir.

Optionally, the first and second outer circular surfaces each comprise non-recessed portions free of any first and second recesses, wherein the non-recessed portions of the first and second outer circular surfaces, together cover the entire circumference of the stopper, seen in a view along a centre axis of the stopper. Thereby, a stopper is provided ensuring removal dirt, debris, clay, and/or liquid film along the entire inner circumference of the tube, upon displacement of the stopper along the tube, while a fluid connection past the stopper is ensured.

Optionally, the stopper is arranged at a distance from the first end of the stick body being less than 50% of the distance between the first and second ends. Thereby, a relative short distance between the stopper and the level indicator is provided in comparison to a dipstick comprising a stopper at an upper end of the dip stick. Thereby, the measuring accuracy of the dipstick is improved in a cost-efficient manner.

Optionally, the stopper is arranged at a distance from the first end of the stick body being less than 40% of the distance between the first and second ends. Thereby, a relative short distance between the stopper and the level indicator is provided in comparison to a dipstick comprising a stopper at an upper end of the dip stick. Thereby, the measuring accuracy of the dipstick is improved in a cost-efficient manner.

According to a second aspect of the invention, the object is achieved by a gauge arrangement for indicating a liquid level in a liquid reservoir, wherein the gauge arrangement comprises a dipstick according to some embodiments, and a tube comprising a first tube end and a second tube end. The first tube end is configured to extend into the liquid reservoir. The second tube end is configured to receive the dipstick. The tube comprises a narrowing portion arranged between the first and second tube ends. The tube comprises a first inner diameter along a portion of the tube extending from the second tube end to the narrowing portion. The first inner diameter essentially corresponds to the outer diameters of the first and second outer circular surfaces.

Since the gauge arrangement comprises a dipstick overcoming, or at least alleviating, at least some of the above-mentioned problems and drawbacks, a gauge arrangement is provided which overcomes, or at least alleviates, at least some of the above-mentioned problems and drawbacks. As a result, the above-mentioned object is achieved.

According to a third aspect of the invention, the object is achieved by a power source for a vehicle, wherein the power source is configured to provide motive power to the vehicle, and wherein the power source comprises a liquid reservoir and a gauge arrangement according to some embodiments, wherein the tube of the gauge arrangement extends into the liquid reservoir.

Since the power source comprises a gauge arrangement which overcomes, or at least alleviates, at least some of the above-mentioned problems and drawbacks, a power source is provided which overcomes, or at least alleviates, at least some of the above-mentioned problems and drawbacks. Further, a power source is provided with reduced risk of blow out of the dipstick.

As a result, the above-mentioned object is achieved.

According to a fourth aspect of the invention, the object is achieved by a transmission for a vehicle, wherein a power source of the vehicle is configured to provide motive power to the vehicle, via the transmission, and wherein the transmission comprises a liquid reservoir and a gauge arrangement according to some embodiments, wherein the tube of the gauge arrangement extends into the liquid reservoir.

Since the transmission comprises a gauge arrangement which overcomes, or at least alleviates, at least some of the above-mentioned problems and drawbacks, a transmission is provided which overcomes, or at least alleviates, at least some of the above-mentioned problems and drawbacks. Further, a transmission is provided with reduced risk of blow out of the dipstick.

As a result, the above-mentioned object is achieved.

According to a fifth aspect of the invention, the object is achieved by a vehicle comprising at least one of a power source according to some embodiments, and/or a transmission according to some embodiments.

Since the vehicle comprises at least one of a power source according to some embodiments, and/or a transmission according to some embodiments, overcoming, or at least alleviating, at least some of the above-mentioned problems and drawbacks, a vehicle is provided which overcomes, or at least alleviates, at least some of the above-mentioned problems and drawbacks. Further, a vehicle is provided with reduced risk of blow out of the one or more dipsticks.

As a result, the above-mentioned object is achieved.

Further features of, and advantages with, the present invention will become apparent when studying the appended claims and the following detailed description.

### BRIEF DESCRIPTION OF THE DRAWINGS

Various aspects of the invention, including its particular features and advantages, will be readily understood from the example embodiments discussed in the following detailed description and the accompanying drawings, in which:
Fig. 1 illustrates a cross section of a gauge arrangement for indicating a liquid level in a liquid reservoir,
Fig. 2 illustrates an enlarged view of the stopper illustrated in Fig. 1,
Fig. 3 illustrates the stopper illustrated in Fig. 2, in a view along a centre axis of the stopper,
Fig. 4 illustrates a stopper according to some further embodiments, in a view along a centre axis of the stopper,
Fig. 5 illustrates a powertrain for a vehicle, according to some embodiments, and
Fig. 6 illustrates a vehicle comprising the power source and the transmission, illustrated in Fig. 5.

### DETAILED DESCRIPTION

Aspects of the present invention will now be described more fully. Like numbers refer to like elements throughout. Well-known functions or constructions will not necessarily be described in detail for brevity and/or clarity.

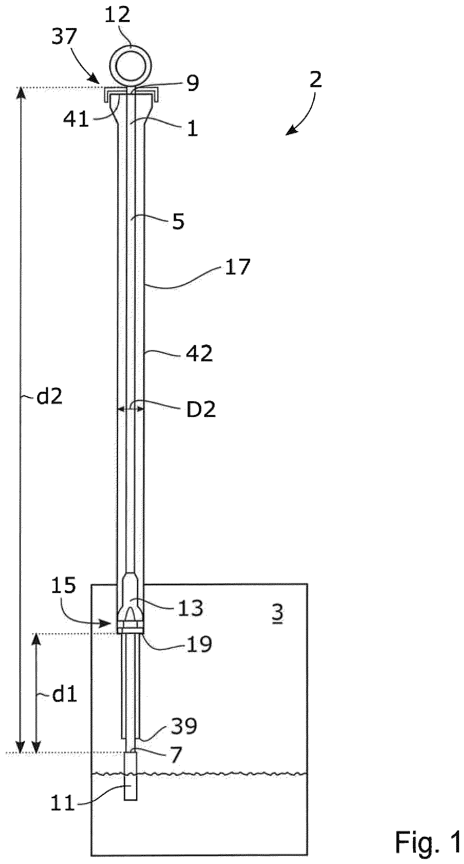

Fig. 1 illustrates a cross section of a gauge arrangement 2 for indicating a liquid level in a liquid reservoir 3. The gauge arrangement 2 comprises a tube 17 and a dipstick 1. The tube 17 extends into the liquid reservoir 3. The dipstick 1 comprises a stick body 5 comprising a first end 7 and a second end 9. The stick body 5 may comprise wires that are spun in a spiral, a flat metal stick, a flat plastic stick, a metal or plastic stick having a circular cross section, or the like. The stick body 5 comprises a level indicator 11 arranged at the first end 7. The level indicator 11 may for example comprise an indicator body provided with one or more lines, numbers, or the like, distributed on a surface of the indicator body. The dipstick comprises a grip 12 at the second end 9 facilitating insertion, and removal of, the dipstick into, and out of, the tube 17.

The tube 17 comprises a first tube end 39 and a second tube end 41. The first tube end 39 extends into the liquid reservoir 3. The second tube end 41 is configured to receive the dipstick 1. The tube 17 comprises a narrowing portion 19 arranged between the first and second tube ends 39, 41.

The dipstick comprises a stopper 13 arranged at a portion 15 of the stick body 5 between the first and second ends 7, 9 of the dip stick 1. In Fig. 1, the stick body 5, including the stopper 13, is illustrated as being fully inserted into a tube 17. The stopper 13 is arranged to abut against a narrowing portion 19 of the tube 17 to position the level indicator 11 at a predetermined position within the liquid reservoir 3. According to the illustrated embodiments, the predetermined position is such that the level indicator 11 is partially covered by liquid, when the liquid reservoir 3 is filled with a predetermined amount of liquid. By displacing the dipstick out of the tube 17, a user can gain information about the level of liquid in the liquid reservoir 3 by checking the extent of the level indicator 11 covered by the liquid. According to the illustrated example embodiments, the portion of the tube 17 comprising the narrowing portion 19 is arranged inside the liquid reservoir 3. However, the portion of the tube 17 comprising the narrowing portion 19 may be arranged outside of the liquid reservoir 3.

According to the illustrated embodiments, the stopper 13 is arranged at a distance d1 from the first end 7 of the stick body 5 being approximately 17.8% of the distance d2 between the first and second ends 7, 9. According to further embodiments, the stopper 13 may be arranged at a distance d1 from the first end 7 of the stick body 5 being less than 5%, 10%, 20%, 30%, 40%, or 50% of the distance d2 between the first and second ends 7, 9. Thereby, a relative short distance d1 between the stopper 13 and the level indicator 11 is provided, which improves the measuring accuracy of the dipstick 1 in a cost-efficient manner. This since the tolerance deviation becomes smaller when the distance between the stopper 13 and the first end 7 of the stick body 5 is shorter. An alternative solution for improving the measuring accuracy of the dipstick 1 could be to use a dipstick body 5 and a tube 17 having higher tolerances. However, such a solution would add cost.

The dimensions of tube 17 of the gauge arrangement 2 is adapted to the dimensions of the dipstick 1. That is, the length of a portion 42 of the tube 17 extending from the second tube end 41 to the narrowing portion 19 of the tube 17 essentially corresponds to the length between the second end 9 of the dipstick 1 and the stopper 13 of the dipstick 1. Further, the narrowing portion 19 of the tube 17 is located at a position relative the liquid reservoir 3 such that when the stopper 13 is abutting against the narrowing portion 19, the level indicator 11 is positioned at the predetermined position within the liquid reservoir 3.

The gauge arrangement 2 further comprises a cover 37 at an upper portion thereof. The cover 37 is configured to provide a seal of the interior of the tube 17 from the environment outside the tube 17. However, the cover 37 comprises at least one fluid connection connecting the interior of the tube 17 and the environment outside the tube 17. This in order to prevent the build-up of an overpressure in the liquid reservoir 3, as will be further discussed below. Further, the cover 37 is arranged to provide the above described sealing function along a certain tolerance interval. The dipstick 1 comprises a relative great distance between the stopper 13 and the second end 9 of the dipstick 1. Since the cover 37 is arranged to provide the above described sealing function along the certain tolerance interval, the interior of the tube 17 can be sealed from the environment outside the interior of the tube 17, without having to use a dipstick body 5 having high tolerances.

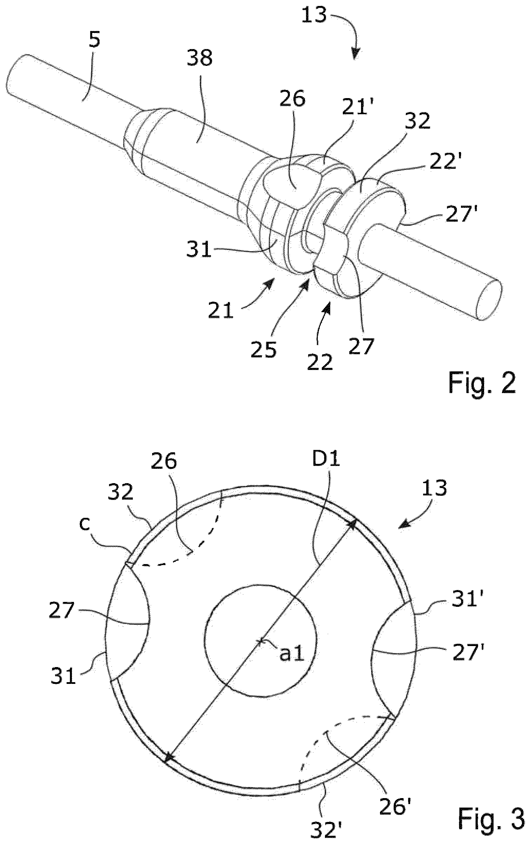

Fig. 2 illustrates an enlarged view of the stopper 12 illustrated in Fig. 1. As illustrated, the stopper 13 comprises a first protrusion 21 having a first outer circular surface 21' and a second protrusion 22 having a second outer circular surface 22'. The stopper 13 further comprises an annular groove 25 arranged between the first and second protrusions 21, 22. The first outer circular surface 21' comprises two first recesses 26. Only one first recesses 26 is visible in Fig. 1. The second outer circular surface 22' comprises two second recesses 27, 27'. Due to the annular groove 25, and due to the first and second recesses 26, 27, 27', a fluid connection past the stopper 13 is formed, when the stopper 13 is inserted into a tube 17 having an inner diameter D2 essentially corresponding to the outer diameter D1 of the first and second protrusions 21, 22. As a result, a stopper 13, and thus also a dipstick 1 comprising the stopper 13, is provided, capable of eliminating, or at least alleviating, the risk of a pressure build-up in the liquid reservoir 3, illustrated in Fig. 1. Thereby, also the risk of displacement of the dipstick 1 out of the tube 17, caused by an over pressure in the liquid reservoir 3, is reduced.

According to the illustrated embodiments, the stopper 13 comprises one coherent piece of plastic which has been moulded around the stick body 5. The stopper 13 further comprises an elongated body portion 38 extending along a portion of the stick body 5. The elongated body portion 38 facilitates and improves adhesion between the stopper 13 and the stick body 5.

Fig. 3 illustrates the stopper 13 illustrated in Fig. 2, in a view along a centre axis a1 of the stopper 13. As illustrated, the two first recesses 26, 26' are arranged at different circumferential positions than the two second recesses 27, 27'. Also, as illustrated, the first and second outer circular surfaces 21', 22' each comprise non-recessed portions 31, 31', 32, 32' free of any first and second recesses 26, 26', 27, 27'. The non-recessed portions 31, 31', 32, 32' of the first and second outer circular surfaces 21', 22' together cover the entire circumference c of the stopper 13, seen in the view along the centre axis a1 of the stopper 13. Thereby, removal of dirt, debris, clay, and/or liquid film is ensured along the entire inner circumference of the tube 17, illustrated in Fig. 1, when the stopper 13 is displaced along the tube 17. Still, a fluid connection past the stopper 13 is ensured, which reduces the risk of a blow out of the dipstick 1 upon a pressure increase in the liquid reservoir 3.

Further, as best seen in Fig. 3, the stick body 5 extends through the stopper 13, essentially coaxially with a centre axis a1 of the stopper 13. Also, as best seen in Fig. 3, the first and second outer circular surfaces 21', 22' have essentially the same outer diameters D1. The tube 17 illustrated in Fig. 1 comprises a first inner diameter D2 along a portion 42 of the tube extending from the second tube end 41 to the narrowing portion 19. The first inner diameter D2 essentially corresponds to the outer diameters D1 of the first and second outer circular surfaces 21', 22'. At the narrowing portion 19, the diameter of the tube 17 is smaller than the outer diameters D1 of the first and second outer circular surfaces 21', 22'.

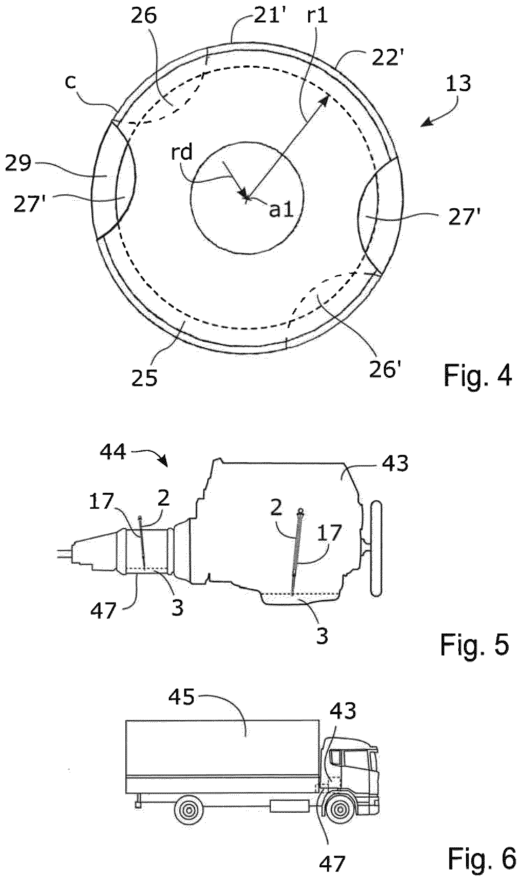

Fig. 4 illustrates a stopper 13 according to some further embodiments, in a view along a centre axis a1 of the stopper 13. The stopper 13 illustrated in Fig. 4 comprises the same functions, features and advantages as the stopper 13 illustrated in the Figures 1 - 3, with the exception that the stopper 13 illustrated in Fig. 4 comprises an O-ring 29 arranged in the annular groove 25. As illustrated in Fig. 4, each recess 26, 26', 27, 27' of the first and second recesses 26, 26', 27, 27' extend past an inner radius r1 of the O-ring 29 seen in a radial direction rd of the stopper 13, from the first and second outer circular surfaces 21', 22' towards the centre axis a1 of the stopper 13. Thereby, a fluid connection past the stopper 13 is ensured, when the stopper 13 is inserted into a tube having an inner diameter essentially corresponding to the outer diameters of the first and second protrusions.

Fig. 5 illustrates a powertrain 44 for a vehicle, according to some embodiments. The powertrain 44 comprises power source 43 and a transmission 47.

Fig. 6 illustrates a vehicle 45 comprising the power source 43 and the transmission 47, illustrated in Fig. 5. According to the illustrated embodiments, the power source 43 is configured to provide motive power to the vehicle 45 via the transmission 47. As illustrated in Fig. 5, the power source 43 comprises a liquid reservoir 3 and a gauge arrangement 2 according to the embodiments illustrated in Fig. 1, wherein the tube 17 of the gauge arrangement 2 extends into the liquid reservoir 3. Also, as illustrated in Fig. 5, the transmission 47 comprises a liquid reservoir 3 and a gauge arrangement 2 according to the embodiments illustrated in Fig. 1, wherein the tube 17 of the gauge arrangement 2 extends into the liquid reservoir 3.

According to the embodiments illustrated in Fig. 6, the vehicle 45 is a truck. However, power source 43 and/or the transmission 47, and thus also the gauge arrangement 2, may be comprised in another type of manned or unmanned vehicle for land or water based propulsion such as a lorry, a bus, a construction vehicle, a tractor, a car, a ship, a boat, etc.

Further, according to the illustrated embodiments, the power source 43 is a diesel engine. According to further embodiments, the power source 43 may be another type of combustion engine, such as an Otto engine configured to operate on gasoline, ethanol, or similar volatile fuels. According to still further embodiments, the power source 43 may be a stationary power source, such as a power source connected to a generator for generating electricity.

It is to be understood that the foregoing is illustrative of various example embodiments and that the invention is defined only by the appended claims. A person skilled in the art will realize that the example embodiments may be modified, and that different features of the example embodiments may be combined to create embodiments other than those described herein, without departing from the scope of the present invention, as defined by the appended claims. For instance, the first outer circular surface 21' and/or the second outer circular surface 22', may each comprise a different number of recesses 26, 26', 27, 27' than two, such as one, three, four, five, six, etc.

According to the illustrated embodiments herein, the first outer circular surface 21' and the second outer circular surface 22' are cylindrically shaped. Thus, according to these embodiments, the first outer circular surface 21' and the second outer circular surface 22' may also be referred to as the first outer cylindrical surface 21' and the second outer cylindrical surface 22'.

Further, according to some embodiments, the stick body 5 may extend past the second end 9. In such embodiments, the term "second end 9 of the stick body 5" is intended to encompass the portion of the stick body 5 being located at the second tube end 41, when the dipstick 1 is fully inserted into the tube 17, i.e. when the stopper 13 is abutting against the narrowing portion 19 of the tube 17.

As used herein, the term "comprising" or "comprises" is open-ended, and includes one or more stated features, elements, steps, components or functions but does not preclude the presence or addition of one or more other features, elements, steps, components, functions or groups thereof.

## Claims

1. A dipstick (1) for indicating a liquid level in a liquid reservoir (3), wherein the dipstick (1) comprises:
- a stick body (5) comprising a first end (7) and a second end (9),
- a level indicator (11) arranged at the first end (7), and
- a stopper (13) arranged at a portion (15) of the stick body (5) between the first and second ends (7, 9),
wherein the stick body (5), including the stopper (13), is configured to be inserted into a tube (17) extending into the liquid reservoir (3),
wherein the stopper (13) is configured to be fully inserted into the tube (17),
wherein the stopper (13) is arranged to abut against a narrowing portion (19) of the tube (17) to position the level indicator (11) at a predetermined position within the liquid reservoir (3),
**characterized in that** the stopper (13) comprises a first protrusion (21) having a first outer circular surface (21') and a second protrusion (22) having a second outer circular surface (22'),
wherein the first and second outer circular surfaces (21', 22') have essentially the same outer diameters (D1),
wherein the stopper (13) comprises an annular groove (25) arranged between the first and second protrusions (21, 22),
wherein the first outer circular surface (21') comprises at least one first recess (26, 26'), and the second outer circular surface (22') comprises at least one second recess (27, 27'), wherein the first outer circular surface (21') comprises at least two first recesses (26, 26'), and the second outer circular surface (22') comprises at least two second recesses (27, 27'), and wherein the at least two first recesses (26, 26') are arranged at different circumferential positions than the at least two second recesses (27, 27').

2. The dipstick (1) according to claim 1, wherein the at least one first recess (26, 26') is arranged at a different circumferential position than the at least one second recess (27, 27').

3. The dipstick (1) according to claim 1 or 2, wherein the at least one first and second recesses (26, 26', 27, 27'), and the annular groove (25), are arranged such that they together form a fluid connection past the stopper (13), when the stopper (13) is inserted into a tube (17) having an inner diameter (D2) essentially corresponding to the outer diameter (D1) of the first and second protrusions (21, 22).

4. The dipstick (1) according to any one of the preceding claims, wherein the stopper (13) comprises an O-ring (29) arranged in the annular groove (25).

5. The dipstick (1) according to claim 4, wherein each recess (26, 26', 27, 27') of the first and second recesses (26, 26', 27, 27') extend past an inner radius (r1) of the O-ring (29) seen in a radial direction (rd) of the stopper (13), from the first and second outer circular surfaces (21', 22') towards a centre axis (a1) of the stopper (13).

6. The dipstick (1) according to any one of the preceding claims, wherein the first and second outer circular surfaces (21', 22') each comprise non-recessed portions (31, 31', 32, 32') free of any first and second recesses (26, 26', 27, 27'), wherein the non-recessed portions (31, 31', 32, 32') of the first and second outer circular surfaces (21', 22') together cover the entire circumference (c) of the stopper (13), seen in a view along a centre axis (a1) of the stopper (13).

7. The dipstick (1) according to any one of the preceding claims, wherein the stopper (13) is arranged at a distance (d1) from the first end (7) of the stick body (5) being less than 50% of the distance (d2) between the first and second ends (7, 9).

8. The dipstick (1) according to any one of the preceding claims, wherein the stopper (13) is arranged at a distance (d1) from the first end (7) of the stick body (5) being less than 40% of the distance (d2) between the first and second ends (7, 9).

9. The dipstick (1) according to any one of the preceding claims, wherein the stick body (5) extends through the stopper (13), essentially coaxially with a centre axis (a1) of the stopper (13).

10. A gauge arrangement (2) for indicating a liquid level in a liquid reservoir (3), wherein the gauge arrangement (2) comprises:
- a dipstick (1) according to any one of the preceding claims, and
- a tube (17) comprising a first tube end (39) and a second tube end (41),
wherein the first tube end (39) is configured to extend into the liquid reservoir (3), and
wherein the second tube end (41) is configured to receive the dipstick (1),
wherein the tube (17) comprises a narrowing portion (19) arranged between the first and second tube ends (39, 41),
wherein the tube (17) comprises a first inner diameter (D2) along a portion (42) of the tube extending from the second tube end (41) to the narrowing portion (19), and
wherein the first inner diameter (D2) essentially corresponds to the outer diameters (D1) of the first and second outer circular surfaces (21', 22').

11. A power source (43) for a vehicle (45), wherein the power source (43) is configured to provide motive power to the vehicle (45), and wherein the power source (43) comprises a liquid reservoir (3) and a gauge arrangement (2) according to claim 10, wherein the tube (17) of the gauge arrangement (2) extends into the liquid reservoir (3).

12. A transmission (47) for a vehicle (45), wherein a power source (43) of the vehicle (45) is configured to provide motive power to the vehicle (45), via the transmission (47), and wherein the transmission (47) comprises a liquid reservoir (3) and a gauge arrangement (2) according to claim 10, wherein the tube (17) of the gauge arrangement (2) extends into the liquid reservoir (3).

13. A vehicle (45) comprising at least one of a power source (43) according to claim 11 and/or a transmission (47) according to claim 12.

## Patentansprüche

1. Peilstab (1) zum Anzeigen eines Flüssigkeitspegels in einem Flüssigkeitsbehälter (3), wobei der Peilstab (1) aufweist:
- einen Stabkörper (5) mit einem ersten Ende (7) und einem zweiten Ende (9),
- einen Füllstandsanzeiger (11), der an dem ersten Ende (7) angeordnet ist, und
- einen Stopper (13), der an einem Abschnitt (15) des Stabkörpers (5) zwischen dem ersten und dem zweiten Ende (7, 9) angeordnet ist,
wobei der Stabkörper (5) einschließlich des Stoppers (13) dazu ausgeführt ist, in ein Rohr (17) eingeführt zu werden, das sich in den Flüssigkeitsbehälter (3) erstreckt,
wobei der Stöpsel (13) dazu ausgeführt ist, vollständig in das Rohr (17) eingeführt zu werden,
wobei der Stopper (13) dazu angeordnet ist, an einem Verengungsabschnitt (19) des Rohrs (17) anzuliegen, um den Füllstandsanzeiger (11) an einer vorbestimmten Position innerhalb des Flüssigkeitsbehälters (3) zu positionieren,
**dadurch gekennzeichnet, dass** der Stopper (13) einen ersten Vorsprung (21) mit einer ersten äußeren kreisförmigen Oberfläche (21') und einen zweiten Vorsprung (22) mit einer zweiten äußeren kreisförmigen Oberfläche (22') umfasst,
wobei die erste und die zweite äußere kreisförmige Oberfläche (21', 22') im Wesentlichen den gleichen Außendurchmesser (D1) haben,
wobei der Stopper (13) eine Ringnut (25) aufweist, die zwischen dem ersten und dem zweiten Vorsprung (21, 22) angeordnet ist,
wobei die erste äußere kreisförmige Oberfläche (21') mindestens eine erste Vertiefung (26, 26') und die zweite äußere kreisförmige Fläche (22') mindestens eine zweite Vertiefung (27, 27') aufweist, wobei die erste äußere kreisförmige Oberfläche (21') mindestens zwei erste Vertiefungen (26, 26') aufweist und die zweite äußere kreisförmige Oberfläche (22') mindestens zwei zweite Vertiefungen (27, 27') aufweist, und wobei die mindestens zwei ersten Vertiefungen (26, 26') an unterschiedlichen Umfangspositionen angeordnet sind als die mindestens zwei zweiten Vertiefungen (27, 27').

2. Peilstab (1) nach Anspruch 1, wobei die mindestens eine erste Vertiefung (26, 26') an einer anderen Umfangsposition angeordnet ist als die mindestens eine zweite Vertiefung (27, 27').

3. Peilstab (1) nach Anspruch 1 oder 2, wobei die mindestens eine erste und zweite Vertiefung (26, 26', 27, 27') und die Ringnut (25) so angeordnet sind, dass sie zusammen eine Fluidverbindung am Stopper (13) vorbei bilden, wenn der Stopper (13) in ein Rohr (17) mit einem Innendurchmesser (D2) eingesetzt ist, der im Wesentlichen dem Außendurchmesser (D1) des ersten und zweiten Vorsprungs (21, 22) entspricht.

4. Peilstab (1) nach einem der vorhergehenden Ansprüche, wobei der Stopper (13) einen in der Ringnut (25) angeordneten O-Ring (29) aufweist.

5. Peilstab (1) nach Anspruch 4, wobei sich jede Vertiefung (26, 26', 27, 27') der ersten und zweiten Vertiefungen (26, 26', 27, 27') in radialer Richtung (rd) des Stoppers (13) gesehen über einen Innenradius (r1) des O-Rings (29) hinaus von der ersten und zweiten äußeren kreisförmigen Oberflächen (21', 22') in Richtung auf eine Mittelachse (a1) des Stoppers (13) erstreckt.

6. Peilstab (1) nach einem der vorhergehenden Ansprüche, wobei die ersten und die zweiten äußeren kreisförmigen Oberflächen (21', 22') jeweils nicht vertiefte Abschnitte (31, 31', 32, 32') aufweisen, die frei von ersten und zweiten Vertiefungen (26, 26', 27, 27') sind, wobei die nicht vertieften Abschnitte (31, 31', 32, 32') der ersten und zweiten äußeren kreisförmigen Oberflächen (21', 22'), gesehen in einer Ansicht entlang einer Mittelachse (a1) des Stoppers (13), zusammen den gesamten Umfang (c) des Stoppers (13) abdecken.

7. Peilstab (1) nach einem der vorhergehenden Ansprüche, wobei der Stopper (13) in einem Abstand (d1) vom ersten Ende (7) des Stabkörpers (5) angeordnet ist, der weniger als 50% des Abstandes (d2) zwischen dem ersten und dem zweiten Ende (7, 9) beträgt.

8. Peilstab (1) nach einem der vorhergehenden Ansprüche, wobei der Stopper (13) in einem Abstand (d1) vom ersten Ende (7) des Stabkörpers (5) angeordnet ist, der weniger als 40% des Abstandes (d2) zwischen dem ersten und dem zweiten Ende (7, 9) beträgt.

9. Peilstab (1) nach einem der vorhergehenden Ansprüche, wobei der Stabkörper (5) sich im Wesentlichen koaxial zu einer Mittelachse (a1) des Stoppers (13) durch den Stopper (13) erstreckt.

10. Messanordnung (2) zur Anzeige eines Flüssigkeitspegels in einem Flüssigkeitsbehälter (3), wobei die Messanordnung (2) umfasst:
einen Peilstab (1) nach einem der vorhergehenden Ansprüche, und
ein Rohr (17) mit einem ersten Rohrende (39) und einem zweiten Rohrende (41),
wobei das erste Rohrende (39) dazu ausgeführt ist, sich in den Flüssigkeitsbehälter (3) zu erstrecken, und
wobei das zweite Rohrende (41) dazu ausgeführt ist, den Peilstab (1) aufzunehmen,
wobei das Rohr (17) einen Verengungsabschnitt (19) aufweist, der zwischen dem ersten und dem zweiten Rohrende (39, 41) angeordnet ist,
wobei das Rohr (17) einen ersten Innendurchmesser (D2) entlang eines Abschnitts (42) des Rohrs aufweist, der sich von dem zweiten Rohrende (41) zu dem Verengungsabschnitt (19) erstreckt, und
wobei der erste Innendurchmesser (D2) im Wesentlichen dem Außendurchmesser (D1) der ersten und zweiten äußeren kreisförmigen Oberfläche (21', 22') entspricht.

11. Energiequelle (43) für ein Fahrzeug (45), wobei die Energiequelle (43) dazu ausgeführt ist, das Fahrzeug (45) mit Antriebsenergie zu versorgen, und wobei die Energiequelle (43) einen Flüssigkeitsbehälter (3) und eine Messanordnung (2) nach Anspruch 10 umfasst, wobei sich das Rohr (17) der Messanordnung (2) in den Flüssigkeitsbehälter (3) erstreckt.

12. Getriebe (47) für ein Fahrzeug (45), wobei eine Energiequelle (43) des Fahrzeugs (45) dazu ausgeführt ist, dem Fahrzeug (45) über das Getriebe (47) Antriebsenergie zu liefern, und wobei das Getriebe (47) einen Flüssigkeitsbehälter (3) und eine Messanordnung (2) nach Anspruch 10 umfasst, wobei das Rohr (17) der Messanordnung (2) sich in den Flüssigkeitsbehälter (3) erstreckt.

13. Fahrzeug (45) mit mindestens einer Energiequelle (43) nach Anspruch 11 und/oder einem Getriebe (47) nach Anspruch 12.

## Revendications

1. Jauge (1) pour indiquer un niveau de liquide dans un réservoir de liquide (3), dans laquelle la jauge (1) comprend :
- un corps de bâton (5) comprenant une première extrémité (7) et une deuxième extrémité (9),
- un indicateur de niveau (11) agencé au niveau de la première extrémité (7), et
- un bouchon (13) agencé au niveau d'une partie (15) du corps de bâton (5) entre les première et deuxième extrémités (7, 9),
dans lequel le corps de bâton (5), comprenant le bouchon (13), est configuré pour être inséré dans un tube (17) s'étendant dans le réservoir de liquide (3),
dans lequel le bouchon (13) est configuré pour être complètement inséré dans le tube (17),
dans lequel le bouchon (13) est agencé pour buter contre une partie de rétrécissement (19) du tube (17) pour positionner l'indicateur de niveau (11) à une position prédéterminée à l'intérieur du réservoir de liquide (3),
**caractérisé en ce que** le bouchon (13) comprend une première saillie (21) ayant une première surface circulaire extérieure (21') et une deuxième saillie (22) ayant une deuxième surface circulaire extérieure (22'),
dans lequel les première et deuxième surfaces circulaires externes (21', 22') ont essentiellement les mêmes diamètres externes (D1),
dans lequel le bouchon (13) comprend une rainure annulaire (25) agencée entre les première et deuxième saillies (21, 22),
dans lequel la première surface circulaire externe (21') comprend au moins un premier évidement (26, 26'), et la deuxième surface circulaire externe (22') comprend au moins un deuxième évidement (27, 27'), dans lequel la première surface circulaire externe (21') comprend au moins deux premiers évidements (26, 26'), et la deuxième surface circulaire externe (22') comprend au moins deux deuxièmes évidements (27, 27'), et dans lequel les au moins deux premiers évidements (26, 26') sont agencés à des positions circonférentielles différentes de celles des au moins deux deuxièmes évidements (27, 27').

2. Jauge (1) selon la revendication 1, dans laquelle le au moins un premier évidement (26, 26') est agencé à une position circonférentielle différente du au moins un deuxième évidement (27, 27').

3. Jauge (1) selon la revendication 1 ou 2, dans laquelle lesdits au moins un premier et un deuxième évidements (26, 26', 27, 27') et la rainure annulaire (25) sont agencés de telle sorte qu'ils forment ensemble une connexion fluidique au-delà du bouchon (13), lorsque le bouchon (13) est inséré dans un tube (17) ayant un diamètre intérieur (D2) correspondant sensiblement au diamètre extérieur (D1) des première et deuxième saillies (21, 22).

4. Jauge (1) selon l'une quelconque des revendications précédentes, dans laquelle le bouchon (13) comprend un joint torique (29) agencé dans la rainure annulaire (25).

5. Jauge (1) selon la revendication 4, dans laquelle chaque évidement (26, 26', 27, 27') des premier et deuxième évidements (26, 26', 27, 27') s'étend au-delà d'un rayon intérieur (r1) du joint torique (29) vu dans une direction radiale (rd) du bouchon (13), à partir des première et deuxième surfaces circulaires extérieures (21', 22') vers un axe central (a1) du bouchon (13).

6. Jauge (1) selon l'une quelconque des revendications précédentes, dans laquelle les première et deuxième surfaces circulaires extérieures (21', 22') comprennent chacune des parties non évidées (31, 31', 32, 32') exemptes de tout premier et deuxième évidements (26, 26', 27, 27'), dans laquelle les parties non évidées (31, 31', 32, 32') des première et deuxième surfaces circulaires extérieures (21', 22') couvrent ensemble la totalité de la circonférence (c) du bouchon (13), vu dans une vue le long d'un axe central (a1) du bouchon (13).

7. Jauge (1) selon l'une quelconque des revendications précédentes, dans laquelle le bouchon (13) est agencé à une distance (d1) de la première extrémité (7) du corps de bâton (5) qui est inférieure à 50 % de la distance (d2) entre les première et deuxième extrémités (7, 9).

8. Jauge (1) selon l'une quelconque des revendications précédentes, dans laquelle le bouchon (13) est agencé à une distance (d1) de la première extrémité (7) du corps de bâton (5) qui est inférieure à 40 % de la distance (d2) entre les première et deuxième extrémités (7, 9).

9. Jauge (1) selon l'une quelconque des revendications précédentes, dans laquelle le corps de bâton (5) s'étend à travers le bouchon (13), essentiellement coaxialement à un axe central (a1) du bouchon (13).

10. Dispositif de jauge (2) pour indiquer un niveau de liquide dans un réservoir de liquide (3), dans lequel le dispositif de jauge (2) comprend :
- une jauge (1) selon l'une quelconque des revendications précédentes, et
- un tube (17) comprenant une première extrémité de tube (39) et une deuxième extrémité de tube (41),
dans lequel la première extrémité de tube (39) est configurée pour s'étendre dans le réservoir de liquide (3), et
dans lequel la deuxième extrémité de tube (41) est configurée pour recevoir la bandelette (1),
dans lequel le tube (17) comprend une partie de rétrécissement (19) agencée entre les première et deuxième extrémités de tube (39, 41),
dans lequel le tube (17) comprend un premier diamètre interne (D2) le long d'une partie (42) du tube s'étendant de la deuxième extrémité de tube (41) à la partie de rétrécissement (19), et
dans lequel le premier diamètre interne (D2) correspond essentiellement aux diamètres externes (D1) des première et deuxième surfaces circulaires externes (21', 22').

11. Source d'alimentation (43) pour un véhicule (45), dans laquelle la source d'alimentation (43) est configurée pour fournir une énergie motrice au véhicule (45), et dans laquelle la source d'alimentation (43) comprend un réservoir de liquide (3) et un agencement de jauge (2) selon la revendication 10, dans lequel le tube (17) de l'agencement de jauge (2) s'étend dans le réservoir de liquide (3).

12. Transmission (47) pour un véhicule (45), dans laquelle une source d'alimentation (43) du véhicule (45) est configurée pour fournir une puissance motrice au véhicule (45), via la transmission (47), et dans laquelle la transmission (47) comprend un réservoir de liquide (3) et un agencement de jauge (2) selon la revendication 10, dans laquelle le tube (17) de l'agencement de jauge (2) s'étend dans le réservoir de liquide (3) .

13. Véhicule (45) comprenant au moins une source d'énergie (43) selon la revendication 11 et/ou une transmission (47) selon la revendication 12.
